# EUROPEAN PATENT SPECIFICATION

(11) **EP 0 910 689 B1**
(45) Date of publication and mention of the grant of the patent: **27.12.2000**
(21) Application number: 97929600.1
(22) Date of filing: 09.07.1997
(51) Int. Cl.: D04H 1/42, D04H 13/00

(54) **METHOD FOR PRODUCING A FELT, A FELT OBTAINABLE IN ACCORDANCE WITH THE SAID METHOD, AND ANTIBALLISTIC-SHAPED PARTS FABRICATED FROM THE SAID FELT**
VERFAHREN ZUR HERSTELLUNG EINES FILZ, DADURCH HERGESTELLTE FILZ, UND ANTIBALLISTISCH-FORMTEILE, HERGESTELLT GEMÄSS DIESEM VERFAHREN
PROCEDE DE FABRICATION D'UN FEUTRE, FEUTRE AINSI FABRIQUE ET PIECES PROFILEES ANTI-BALISTIQUES FABRIQUEES A PARTIR DE CE FEUTRE

(30) Priority: 11.07.1996 NL 1003565; 28.08.1996 BE 9600721
(43) Date of publication of application: 28.04.1999
(73) Proprietor: DSM N.V., 6411 TE Heerlen (NL)
(72) Inventor: VRENKEN, Carla, Maria, Gerardine, Henriette, NL-6301 KJ Valkenburg a/d Geul (NL); VAN DER LOO, Leonardus, Lambertus, Henricus, NL-6176 DK Beek (NL); JACOBS, Martinus, Johannes, Nicolaas, NL-6416 EH Heerlen (NL); SEGERS, Anne-Marie, Gabriella, Robert, NL-3524 DW Utrecht (NL)
(86) International application number: NL9700403
(87) International publication number: WO9802607

(56) References cited:
- EP-A- 0 416 486
- EP-A- 0 516 412
- WO-A-91/04855
- WO-A-93/20271
- US-A- 5 440 965
- US-A- 5 567 498

## Description

The invention relates to a method for producing a felt containing staple fibres of ultra-highly oriented polyethylene having an intrinsic viscosity (in decalin at 135°C) of at least 5 dl/g, comprising the steps of opening up a mass of staple fibres, carding a layer of these staple fibres to produce a bonded fibre web, forming a stacked layer of the bonded fibre web by feeding it to a take-off means on which the bonded fibre web is laid down so as to overlap in zig-zag folds while being taken off at the same time and entangling the stacked layer to produce the felt. The invention also relates to a felt obtainable in accordance with the method, to antiballistic shaped parts which contain, as the protective layer, two or more felts according to the invention, and to antiballistic items of practical use, in particular bullet- and fragment-proof clothing, tarpaulin, umbrellas, blast protection blankets and spall liners.

The above-described method is disclosed by WO/93/20271. The felts obtained in accordance with the known method combine a high protection level with a low areal density. Here and hereinafter the protection level refers to the V₅₀. This is the velocity of a projectile at which the probability of the said projectile penetrating the ballistic structure is 50%. The areal density (AD) is the weight (in kg per square metre) of the felt. The antiballistic quality is expressed in the specific energy absorption (SEA). The SEA is calculated by the kinetic energy absorbed (EA) by the felt upon impact of a fragment with the velocity V₅₀ being divided by the areal density of the felt. There is a continuous need to provide antiballistic protection means which, on the one hand, are light and flexible and thus are also comfortable to wear and which, on the other hand, still provide a very good protection level. The object of the invention is therefore to provide a method for producing a felt having an improved antiballistic quality, or more specifically an improved specific energy absorption (SEA).

This object was achieved according to the invention by an antistatic having been applied to the staple fibres and by the opening-up and carding taking place at a relative humidity of at least 60% and a temperature of at least 20°C

It was found that it is possible, by means of the method according to the invention, to produce a felt having an extraordinarily high antiballistic quality. It was also found that the production process in accordance with the method of the invention is more stable, i.e. that the magnitude of the variations of the antiballistic quality of the felt obtained has been considerably reduced. This is an important advantage in terms of process technology and economics. The effect of the invention is so surprising, in particular, because the said ultra-highly oriented polyethylene fibres do not absorb any water.

The term staple fibres refers to short fibres. Short means less than 200 mm. The staple fibres can be obtained in a known manner by size reduction of continuous filaments, for example by chopping, cutting or breaking (stretch-breaking). The staple fibres consist of ultra-highly oriented polyethylene having an intrinsic viscosity (in decalin at 135°C) of at least 5 dl/g. The polyethylene is a linear homopolymer of ethene or a linear copolymer of ethene and, preferably less than 5 mol%, of other alkenes which can be copolymerized therewith and contain from 3 to 10 carbon atoms. Staple fibres are highly oriented if they have a strength of at least 1.2 GPa and a modulus of at least 40 GPa or have at least been obtained by size reduction of continuous filaments having such a strength and modulus. Preferably, the strength and the modulus are as high as possible. Examples of suitable fibres are known under the brand names Dyneema and Spectra.
Preferably, the fibres in the method according to the invention are crimped and have a fineness of between 0.5 and 8 denier (0.55 - 8.9 dtex). The advantage of this is that the felts obtained by means of the method have an even higher SEA. Although the method according to the invention makes it possible to achieve good results by using staple fibres which are longer than the maximum length of 100 mm stated in WO 93/20271, the length, with a view to attaining a high SEA, is preferably less than 150 mm, more preferably less than 100 mm and most preferably less than 80 mm. Preferably, however, the length is greater than 30 mm and even more preferably greater than 40 mm. If the fibre length exceeds 30 mm, the contexture, the strength and the SEA of the felt are better. The term contexture relates to the degree to which the felt resists deformation by an applied static or cyclic mechanical load.

Opening up a mass of staple fibres involves loosening of staple fibres which are packed on top of one another and adhere to one another. This operation is necessary to achieve a good spread and homogeneous distribution of the individual staple fibres in the fibre mass. Opening up takes place in a known manner, preferably by the fibre mass being whirled around in an airstream. Optionally, the mass of staple fibres may also contain a small quantity of staple fibres of a different material. With a view to attaining a high SEA, the mass of staple fibres consists entirely of the above-specified polyethylene staple fibres.

After opening up, a layer of these opened-up fibres is carded to produce a bonded fibre web. Carding involves disentangling a thick layer of randomly arranged staple fibres to produce a thin bonded fibre web in which the fibres are mainly oriented in one direction. Carding can be effected in a known manner. Preferably carding is effected by means of a cylinder fitted with hoops which are provided with small projecting teeth. These hoops are called the card clothing. The card clothing used is preferably a microfibre card clothing, as known to those skilled in the art for carding ultrafine fibres such as polyamide or polyester fibres having a fineness of less than 1 dpf.

After carding, the carded bonded fibre web obtained is fed to a take-off means on which the bonded fibre web is laid down in zig-zag folds while being taken off at the same time, a stacked layer being formed in the take-off direction, which layer consists of a number of layers of the carded bonded fibre web fed in, which layers are stacked on top of one another and partially overlap one another. The take-off means may be a running belt perpendicular to the take-off direction of the carded batt. The carded batt, in the process, is laid down continuously up and down across the width of the said belt, the bonded fibre web thus being stacked, with a zig-zag overlap, to produce a stacked layer. The thickness of the stacked layer is chosen with a view to the desired thickness of the felt ultimately to be obtained and is adjusted by means of, on the one hand, the thickness of the bonded fibre web and, on the other hand, by means of the ratio of the feed rate of the bonded fibre web and the take-off rate of the stacked layer. The stacked layer preferably comprises from 10 to 40 and more preferably from 20 to 30 bonded fibre webs stacked on top of one another. The areal density chosen is preferably high, with a view to productivity. If the areal density is too high, however, needle break is found to occur too often during needling of the layer and an unduly inhomogeneous felt is obtained owing to a difference in contexture being produced between the top and the bottom of the felt layer in the case of unilateral needling. Because of this, the areal density of the stacked layer is preferably chosen to be between 100 and 500 g/m² and more preferably between 200 and 400 g/m².

The stacked layer may optionally undergo still further processing. Preferably, the stacked layer is calendered and drawn in the take-off direction of the stacked layer. The term calendering refers to compression to a higher density, for example by passing the stacked layer between one or two rollers. The said drawing preferably amounts to less than 100%. As a result, a thinner, more compact, stronger layer having better contexture is obtained. This is followed by entanglement of the stacked layer to produce the felt. Entangling may take place in any known manner (needling, stitching, water-jet entangling), but preferably takes place by means of needling, the needle density preferably being chosen to be between 20 and 60 and more preferably between 30 and 50 needles per cm². This has the advantage that very good contexture is obtained while the antiballistic quality remains very high. The areal density of the ultimately obtained felt is preferably greater than 50 g/m², with a view to high productivity, but, with a view to obtaining good homogeneity and a high SEA, is preferably less than 400 or more preferably less than 350 g/m².

According to the invention, an antistatic is applied to the staple fibres before or during the opening-up process, and opening-up and carding take place at a relative humidity of greater than 60% at a temperature of at least 20°C.
The term relative humidity (hereinafter denoted by RH) refers to the number of grams of water per litre of air, expressed with respect to the number of grams of water per litre of air saturated with water vapour at a particular temperature and pressure.
The RH is preferably chosen to be as high as possible (tropical conditions). Preferably, the RH is at least 65% and yet more preferably at least 70%, the temperatures preferably being chosen to be between 20 and 30°C. Below 20°C it is very difficult to obtain a good felt. Preferably the temperature is above 22°C and yet more preferably above 25°C. For practical reasons the temperature is preferably below 30°C. Good results are achieved at an RH above 65% at a temperature above 22°C. The absolute humidity, expressed as the partial vapour pressure of the water, is preferably at least 1 (133 Pa), preferably at least 1.5 mm Hg (200 Pa). In practice the RH level is limited, unless countermeasures are taken, because too high an RH entails the risk of water vapour condensing and water droplets forming on the fibres, as a result of which the staple fibres cannot be opened up and carded effectively and the ballistic properties of the felt obtained decrease markedly. The RH at temperatures of between 20 and 30°C is therefore preferably less than 95% and more preferably less than 90%. Most preferably, the RH is less than 85%.

The term antistatic refers to a substance which ensures that the fibres do not or only slightly become electrostatically charged during the process. The antistatic used may comprise the antistatics known per se, for example fatty acids or fatty amines or mixtures thereof. In combination with a high humidity the antistatic ensures that the staple fibres can be opened up and carded more easily, resulting in a more uniform distribution of the staple fibres over the surface of the bonded fibre web, and in a surprisingly greatly increased SEA of the felt obtained. It was found that the presence of an excessive amount of antistatic may have an adverse effect on the characteristics of the felt obtained, particularly the SEA, the strength and the contexture of the felt. The antistatic remains on the fibres in the felt and is able to act as a lubricant. It was found, surprisingly, that, in conjunction with the very high humidity, extraordinarily small amounts of antistatic may be sufficient without it having an adverse effect on the characteristics of the felt. In view of the above, the fibres preferably contain an amount of antistatic of less than 3 milligrams (mg) per gram of fibre. This has the advantage that the antiballistic quality is not, or not significantly, impaired thereby. More preferably, the fibres contain an amount of antistatic of less than 1 mg per gram of fibre and yet more preferably less than 0.5 mg per gram of fibre. The antistatic is preferably applied to the continuous filaments before cutting and from a diluted solution, preferably an aqueous solution. This has the advantage that very small amounts of the antistatic can be distributed more uniformly over the fibres. The fibres preferably contain the amount of antistatic of at least 0.01 mg per gram of fibre. With an amount of antistatic lower than 0.01 mg per gram of fibre carding a layer of the staple fibres turned out to be difficult.

The invention also relates to a felt obtainable according to the method of the invention. The areal density of the felt may vary between wide limits and is chosen with a view to the intended application, in particular with a view to the desired protection level in antiballastic shaped parts.

The invention further relates to an antiballistic shaped part containing one or more stacked layers of a felt, obtainable in accordance with the method according to the invention, the said shaped part having a specific energy absorption (SEA) of at least 90 Jm²/kg, as determined in accordance with the STANAG 2920 test using a fragment defined in accordance with US-MIL-P-46593. In this context, the areal density of the felt is preferably between 50 and 400 and more preferably between 100 and 350 g/m², and two or more of the said felts are stacked to produce an antiballistic shaped part having a total areal density tailored to the intended protection level. For the most common threats the total areal density of the shaped part is preferably at least 500 g/m². The advantage of a multilayer structure of the shaped part is that the shaped part is more compact and yet more flexible. The SEA is determined in accordance with the STANAG 2920 test in which .22 calibre FSPs (fragment simulating projectile) made of a nondeformable steel and having a specified shape, weight (1.1 g), hardness and dimensions (in accordance with US-MIL-P-46593) are fired in a defined manner at the ballistic structure. The energy absorption (EA) is calculated from the kinetic energy of the bullet having the V₅₀ velocity. The V₅₀ velocity is the velocity at which the probability of the bullets penetrating through the antiballistic shaped part is 50%. The specific energy absorption (SEA) is calculated by dividing the energy absorption EA by the areal density of the shaped part (areal density: AD). Preferably, the SEA of the shaped part is at least 100, more preferably at least 110 and yet more preferably at least 120 Jm²/kg, the protection level preferably being at least 450, more preferably 470 and most preferably above 500 m/s. For such antiballistic quality levels to be obtainable it is sufficient for the shaped parts to have an areal density above 1 kg per square metre. In the case of shaped parts having a low areal density a higher SEA is achieved as a rule. Another way to express the antiballistic quality, which compensates for the dependence of the SEA on the areal density, is the standardized specific energy absorption (SSEA). This is the energy absorption divided by the square root of the areal density. The shaped part preferably has a standardized specific energy absorption (SSEA) of at least 110, more preferably at least 115, yet more preferably at least 120 and most preferably at least 125 J.m/kg^{0.5}.

The stack of felt layers is preferably enclosed in a cover to counteract the absorption of water and deformation of the shaped part during use. With a view to reducing the absorption of water, the felt or the shaped part is preferably also coated with a coating layer of a water-repellent composition such as a silicone-containing material or a halogenated oligomer or polymer.

The antiballistic shaped part according to the invention is eminently suitable for use in antiballistic items of practical use such as bulletproof and fragmentproof clothing, blast protection blankets, spall liners and the like. The invention also relates to antiballistic articles which include, as the protective layer, a felt or an antiballistic shaped part according to the invention.

The invention further relates to cut-resistant cloth containing a felt layer, obtainable in accordance with the method according to the invention. The said felt layer having a fibre density of at least 150 m of fibre per cm³ felt.
It has been found that such a fibre density is necessary to obtain a high cut resistance and a good strength and stability. Preferably, the fibre density is as high as possible, preferably at least 300, more preferably at least 600 and still more preferably at least 900 and most preferably at least 1200 m of fibre per cm³ of felt.

In the light of achieving a high cut resistance, the felt layer preferably contains at least 50% by weight of the said polyethylene staple fibres. In addition, the felt may contain staple fibres of another polymer material. These may also be strong polymer fibres having a high cut resistance. Preferably, however, the said polyethylene fibres are exclusively used as strong cut-resistant fibres and the other fibres are chosen for other purposes. Thus, in addition to the polyethylene fibres, fibres of cotton, polyamide or polyester may be used for wearing comfort. Preferably, the felt layer comprises the said polyethylene staple fibres and polyamide fibres. Surprisingly, it has been found that the cut resistance does not decrease considerably as a result of the presence of a relatively high content of polyamide fibres with a relatively low cut resistance. Preferably, the content of polyethylene fibres is at least 50% by weight.
Preferably, the felt layer is composed of at least 70% by weight and, more preferably, of at least 90% of the said polyethylene fibres. Most preferably, the felt layer is composed mainly of the said polyethylene staple fibres and the fibre density is at least 300 m of fibre per cm³ of felt. "Mainly" is intended to mean that no other fibres have been incorporated in the felt layer.

The fibre density depends, on the one hand, on the compactness of the felt (in kg/m³) and, on the other hand, on the fineness of the fibres.

The compactness of the felt is preferably at least 75 kg/m³, more preferably at least 90 kg/m³, still more preferably at least 100 kg/m³, and most preferably at least 125 kg/m³. Felts having a higher compactness have a higher fibre density and a smaller layer thickness. A small layer thickness is important for application in protective clothing in connection with wearing comfort. Preferably, the cut-resistant cloth according to the invention is not more than 10 mm thick, more preferably not more than 5 mm thick and most preferably not more than 3 mm thick.
In another embodiment of the cut-resistant cloth according to the invention, a knitted fabric layer or woven fabric layer of yarns which contain polymer fibres having a tensile strength of at least 1.2 GPa and a modulus of at least 40 GPa is bonded to the felt layer. It has been found that the resistance to piercing increases markedly as a result of this while the cut resistance remains high. In the light of obtaining both a high resistance to piercing and a high cut resistance, the felt layer is situated in a protective envelope preferably on the outside, that is to say on that side of the cloth remote from the object to be protected. Preferably, the polymer fibres in the yarns of the knitted fabric or woven fabric are also composed of linear polyethylene having an intrinsic viscosity in decalin at 135°C of at least 5 dl/g.

The felt and the fabric can be joined to one another in a known manner, for example by stitching, sewing or needling.

In another embodiment according to the invention, the felt layer in the cut-resistant cloth is impregnated with a binder material containing particles having a hardness of at least 3 on the Mohs' hardness scale. Preferably, the hardness is at least 5 on the Mohs' hardness scale. The particles preferably have a diameter of 0.001 - 1 mm, more preferably 0.01 - 0.5 mm and still more preferably of 0.05 - 0.2 mm. Suitable materials are, for example, ceramic powders, glass powder and sand. Impregnated is intended to mean that the felt layer is at least partly filled, the binder material also being able to form a covering layer.
Partly is intended to mean a part of the surface and/or a part of the thickness of the felt layer.

The advantage of the presence of hard particles is that they appreciably increase the cut resistance. The cloth can consequently be thinner for a comparable protection level. However, the flexibility of the cloth remains high. The advantage of hard particles in a felt, compared with hard particles in a woven fabric or knitted fabric, is that the particles in the felt are better encapsulated and are therefore not so easily detached from the cloth when the cloth is used, when it is exposed to cutting, piercing or abrasion.

The impregnation of the felt can easily be carried out by wetting it with a melt, solution or a dispersion of the binder material which contains the hard particles. As a result of the open structure of the felt, the hard particles are easily able to penetrate the felt and be bonded therein to the fibres by the binder.

The binder material with the hard particles present therein completely or partly fills the space between the staple fibres in the felt and binds the fibres together. If the binder material does not completely fill the spaces, the cloth has the advantage that it is permeable to gas. This is an advantage for application in cut-resistant clothing because perspiration moisture can consequently evaporate through the cloth. Preferably, the pore size is so small under these circumstances that the cloth is nevertheless not permeable to moisture. In applications where protection against dangerous chemical substances is also required, the binder material preferably completely fills the space between the staple fibres in the felt, as a result of which the cloth is continuous.

Preferably, the binder is an elastomeric material. As a result, the cloth remains flexible.

The invention furthermore relates to a protective envelope containing one of the embodiments of the cutresistant cloth according to the invention described above as protective layer, in particular to protective items of clothing such as, inter alia, jackets, overalls, trousers, shirts, sleeves and gloves which contain a layer of a cut-resistant cloth over at least those surface parts which are exposed to a risk of cutting or piercing during use. The use of the cut-resistant cloth according to the invention is obviously not limited to protection of the body. The invention also relates to use of a cut-resistant cloth according to the invention as a covering layer for the protection of objects which are sensitive to cutting and piercing such as, inter alia, ropes, hoses, inflatable boats and air balloons.

### Examples I and II

A felt layer was manufactured from crimped, cut Dyneema SK60® filaments having a fineness of 1 denier and a length of 60 mm by carding the staple fibres in the manner described above to form a nonwoven fabric, stacking the nonwoven fabrics and joining them by needling. The felt has a surface weight of approximately 200 g/m² and a fibre density of 720 m of fibre per cm³ of felt.

The cut resistance was determined according to pr EN 388 on a single or double layer of felt.

### Comparative Experiments A-D

As a comparison, woven fabrics (A and B) and a knitted fabric (C) of highly drawn polyethylene fibres Dyneema SK60® were tested. A knitted fabric (D) of a commercially obtainable cutting-resistant yarn (Whizard Liner®) was furthermore also tested. This yarn has a core of metal wire and a cladding of Kevlar and polyamide yarns (D).

| Cutting tests | | | |
|---|---|---|---|
| Sample | Weight | Cutting resistance | Class |
| I. felt (single layer) | 200 g/m² | 5.7 | 3 |
| II. felt (two layers) | 395 g/m² | 12.9 | 4 |
| A. Dyneema woven fabric | 214 g/m² | 1.5 | 1 |
| B. Dyneema woven fabric | 500 g/m² | 4.5 | 2 |
| C. Dyneema double knitted fabric | 610 g/m² | 6.0 | 3 |
| D. | 950 g/m² | 12.9 | 4 |

Stab tests were carried out according to European Standard EN 388 on various cloths (for example III and comparative experiments E-I). The criterion of said standard is the surface weight at which penetration is only just prevented in all five of five stabs carried out. The surface weights of the tested cloths are reported in the table below. The symbol ">" implies that the surface weight mentioned is too low to fulfil the abovementioned criterion. No symbol means that the criterion is fulfilled.
Cloth III: 9 layers of the abovementioned felt.
Cloth E: Stack of knitted layers of a spun staple fibre yarn composed of 50% by weight of Dyneema SK60 and 50% by weight of polyamide.
Cloth F: 3 knitted layers of a composite yarn composed of a steel wire twisted with a spun staple fibre yarn as in cloth E.
Cloth G: 5 knitted layers of a composite yarn composed of a composite yarn as in cloth F which is wound with a continuous filament yarn of Dyneema SK60.
Cloth H: 5 layers of an aramid felt.
Cloth I: 5 layers of a knitted fabric of Dyneema SK60 yarns.

| Cloth | III | E | F | G | H | I |
|---|---|---|---|---|---|---|
| Weight kg/m² | 1.8 | >2.0 | >1.92 | >2.75 | >1.95 | >2.85 |

### Example III

Continuous filaments of an ultra-highly oriented polyethylene fibre (Dyneema SK66) having a modulus of 833 cN/dtex, a tensile strength of 25 cN/dtex and a fineness of 1 denier per filament had an antistatic (Duroslip 1410) applied to them by being wetted with a 10 wt% solution of the antistatic in water, in an amount of 1 litre of solution per 1000 kg of fibre (0.1 milligram per gram of fibre). The continuous filaments were then crimped in a stuffer box and subsequently chopped into staple fibres having a length of 60 mm. These staple fibres were made into the felt. The RH during all the production steps of the felt was between 65 and 75%, at a temperature of 23°C. The chopped staple fibre mass was opened up by being whirled around in a chamber by means of an air stream being injected. A layer of the said opened-up fibre mass was fed to a carding machine in which a bonded fibre web was formed. The bonded fibre web was laid on a conveyor belt whose orientation was perpendicular to the feed direction, the bonded fibre web being stacked in a zig-zag movement, back and forth across the width of the conveyor belt, and being taken off. The speed of the conveyor belt and the feeding rate of the carded bonded fibre web were chosen so as to produce a stacked layer consisting of 14 bonded fibre web layers. The stacked layer was calendered and then drawn 30% in the take-off direction. The drawn layer was entangled by needling using 36 needles/cm². The areal density of the felt thus obtained was 190 g/m². 6 layers of this felt were stacked to produce an antiballistic structure having an areal density of 1.14 kg/m².
The antiballistic structure was tested in accordance with the above-described STANAG 2920 test. The V₅₀ was 488 m/sec, the SEA 115 Jm²/kg.

### Comparative Experiment E

A felt was produced in accordance with the above-described method, the RH being 40% during all these steps and the temperature being 22°C. Under these conditions it proved very difficult to produce a homogeneous felt. An antiballistic shaped part consisting of 6 stacked layers of this felt had an SEA of about 60 Jm²/kg with a very large spread.

## Claims

1. Method for producing a felt containing staple fibres of ultra-highly oriented polyethylene having an intrinsic viscosity (in decalin at 135°C) of at least 5 dl/g, comprising the steps of
- opening up a mass of staple fibres,
- carding a layer of these staple fibres to produce a bonded fibre web,
- forming a stacked layer of the bonded fibre web by feeding it to a take-off means on which the bonded fibre web is laid down so as to overlap in zig-zag folds while being taken off at the same time,
- entangling the stacked layer to produce the felt, characterized in that an antistatic has been applied to the staple fibres and in that the opening-up and carding take place at a relative humidity of at least 60% and a temperature of at least 20°C.

2. Method according to Claim 1, characterized in that the staple fibres are crimped, have a length of between 30 and 100 mm and a fineness of between 0.5 and 8 denier (0,56 - 8,9 dtex).

3. Method according to Claim 1 or 2, characterized in that the stacked layer is calendered and drawn in the take-off direction of the stacked layer.

4. Method according to any one of Claims 1-3, characterized in that the relative humidity is less than 90%.

5. Method according to any one of Claims 1-4, characterized in that the amount of antistatic is less than 3 milligrams of antistatic per gram of fibre.

6. Method according to any one of Claims 1-5, characterized in that carding is carried out by means of a carding cylinder which has been fitted with a microfibre carded clothing.

7. A felt, obtainable in accordance with the method according to Claims 1-6.

8. An antiballistic shaped part containing two or more stacked layers of a felt, obtainable in accordance with the method according to Claims 1-6, the said shaped part having a specific energy absorption (SEA) of at least 90 Jm²/kg, as determined in accordance with the STANAG 2920 test using a fragment defined in accordance with US-MIL-P-46593.

9. An antiballistic shaped part according to Claim 8, characterized in that the shaped part has a standardized specific energy absorption (SSEA) of at least 115 J.m/kg^{0.5}.

10. Antiballistic items which include, as the protective layer, a felt according to Claim 7 or an antiballistic shaped part according to Claim 8 or 9.

11. Cut resistant cloth containing a felt layer obtainable in accordance with the method according to claims 1-6, the felt layer having a fibre density of at least 150 m of fibre per cm³ of felt.

12. Cut resistant cloth according to claim 11, characterized in that a knitted fabric layer or a woven fabric layer of yarns which contain polymer fibres having a tensile strength of at least 1.2 GPa and a modulus of at least 40 GPa is bonded to the felt layer.

13. Cut resistant cloth according to claim 11 or claim 12, characterized in that the felt layer is impregnated with a binder material containing particles having a hardness of at least 3 on the Mohs' hardness scale.

14. Protective envelope containing a cut resistant cloth according to one of the claims 11-13 as protective layer.

15. Protective items of clothing such as, inter alia, jackets, overalls, trousers, shirts, sleeves and gloves which contain a layer of a cut-resistant cloth according to one of Claims 11-13 over at least those surface parts which are exposed to a risk of cutting or piercing during use.

## Patentansprüche

1. Verfahren zur Herstellung eines Filzes, welcher Spinnfasern aus ultrahochorientiertem Polyethylen mit einer intrinsischen Viskosität (in Dekalin bei 135°C) von mindestens 5 dl/g enthält, umfassend die Schritte
des Öffnens einer Masse von Spinnfasern,
des Kardierens einer Schicht dieser Spinnfasern, um ein Verbundfaserbahn herzustellen,
des Bildens einer gestapelten Schicht der Verbundfaserbahn, indem sie einem Entnahmemittel zugeführt wird, auf dem die Verbundfaserbahn abgelegt wird, so daß sie in Zick-Zack-Falten überlappt, während sie gleichzeitig entnommen wird,
des Verwirbelns der gestapelten Schicht, um den Filz herzustellen, dadurch gekennzeichnet, daß ein Antistatikum auf die Spinnfasern aufgetragen worden ist und das Öffnen und das Kardieren bei einer relativen Feuchtigkeit von mindestens 60% und einer Temperatur von mindestens 20°C stattfindet.

2. Verfahren nach Anspruch 1, dadurch gekennzeichnet, daß die Spinnfasern gekräuselt sind und eine Länge zwischen 30 und 100 mm und eine Feinheit zwischen 0,5 und 8 Denier (0,56 - 8,9 dtex) aufweisen.

3. Verfahren nach Anspruch 1 oder 2, dadurch gekennzeichnet, daß die gestapelte Schicht kalandriert und in der Entnahmerichtung der gestapelten Schicht gezogen wird.

4. Verfahren nach einem der Ansprüche 1 bis 3, dadurch gekennzeichnet, daß die relative Feuchtigkeit weniger als 90% beträgt.

5. Verfahren nach einem der Ansprüche 1 bis 4, dadurch gekennzeichnet, daß die Menge an Antistatikum weniger als 3 Milligramm des Antistatikums pro Gramm Faser beträgt.

6. Verfahren nach einem der Ansprüche 1 bis 5, dadurch gekennzeichnet, daß das Kardieren mittels eines Kardierzylinders, ausgestattet mit einer Microfaser-Kratzengamitur, durchgeführt wird.

7. Filz, erhältlich nach dem Verfahren gemäß den Ansprüchen 1 bis 6.

8. Antiballistisches Formteil, welches zwei oder mehrere gestapelte Schichten eines Filzes enthält, welches nach dem Verfahren gemäß den Ansprüchen 1 bis 6 erhältlich ist, wobei das Formteil eine spezifische Energieabsorption (SEA) von mindestens 90 Jm²/kg, wie in Übereinstimmung mit den STANAG 2920-Test unter Verwendung eines in US-MIL-P-46593 definierten Splitters bestimmt, aufweist.

9. Antiballistisches Formteil nach Anspruch 8, dadurch gekennzeichnet, daß das Formteil eine standardisierte spezifische Energieabsorption (SSEA) von mindestens 115 Jm/kg^{0,5} aufweist.

10. Antiballistische Gegenstände, welche als Schutzschicht einen Filz nach Anspruch 7 oder ein antiballistisches Formteil nach Anspruch 8 oder 9 einschließen.

11. Schnittbeständiger Stoff, welcher eine Filzschicht, die nach dem Verfahren gemäß den Ansprüchen 1 bis 6 erhältlich ist, enthält, wobei die Filzschicht eine Faserdichte von mindestens 150 m Fasern pro cm³ Filz aufweist.

12. Schnittbeständiger Stoff nach Anspruch 11, dadurch gekennzeichnet, daß eine Schicht von einer Maschenware oder eine Schicht von einer Webware aus Garnen, die Polymerfasem mit einer Zugfestigkeit von mindestens 1,2 GPa und einem Modul von mindestens 40 GPa enthalten, an die Filzschicht gebunden ist.

13. Schnittbeständiger Stoff nach Anspruch 11 oder 12, dadurch gekennzeichnet, daß die Filzschicht mit einem Bindematerial imprägniert ist, welches Teilchen mit einer Härte von mindestens 3 auf der Mohs-Härteskala enthält.

14. Schutzumhüllung, welche einen schnittbeständigen Stoff nach einem der Ansprüche 11 bis 13 als Schutzschicht enthält.

15. Bekleidungsschutzgegenstände, wie unter anderem Jacken, Overalls, Hosen, Shirts, Ärmel und Handschuhe, welche eine Schicht eines schnittbeständigen Stoffs nach einem der Ansprüche 11 bis 13 über mindestens solche Oberflächenteile enthalten, die einem Risiko hinsichtlich eines Schneidens oder Durchstechens während der Benutzung ausgesetzt sind.

## Revendications

1. Procédé pour produire un feutre contenant des fibres discontinues en polyéthylène très fortement orienté ayant une viscosité intrinsèque (dans la décaline à 135°C) d'au moins 5 dl/g, ce procédé comportant les étapes suivantes :
- l'ouverture d'une masse de fibres discontinues,
- le cardage d'une couche de ces fibres discontinues pour produire une nappe de fibres liées,
- la formation d'une couche d'empilement de la nappe de fibres liées en amenant celle-ci à des moyens d'enlèvement sur lesquels la nappe de fibres liées est déposée de façon à avoir des chevauchements avec des plis en zigzag tout en étant enlevée au même moment,
- le fait d'emmêler la couche d'empilement pour produire le feutre,
caractérisé par le fait qu'un antistatique a été appliqué sur les fibres discontinues, et que l'ouverture et le cardage s'effectuent à une humidité relative d'au moins 60 % et à une température d'au moins 20°C.

2. Procédé selon la revendication 1, caractérisé en ce que les fibres discontinues sont ondulées, elles ont une longueur entre 30 et 100 mm et un titre entre 0,5 et 8 deniers (0,56 à 8,9 dtex).

3. Procédé selon la revendication 1 ou 2, caractérisé en ce que la couche d'empilement est calandrée et étirée dans la direction d'enlèvement de la couche d'empilement.

4. Procédé selon l'une quelconque des revendications 1 à 3, caractérisé en ce que l'humidité relative est inférieure à 90 %.

5. Procédé selon l'une quelconque des revendications 1 à 4, caractérisé en ce que la quantité de l'antistatique est inférieure à 3 milligrammes d'antistatique par gramme de fibre.

6. Procédé selon l'une quelconque des revendications 1 à 5, caractérisé en ce que le cardage est effectué au moyen d'un cylindre de cardage qui a été muni d'un habillage de cardage pour microfibres.

7. Feutre que l'on peut obtenir selon le procédé conforme aux revendications 1 à 6.

8. Pièce en forme, antibalistique, qui contient deux, ou plus, couches d'empilement d'un feutre, que l'on peut obtenir conformément au procédé selon les revendications 1 à 6, ladite pièce en forme ayant une absorption d'énergie spécifique (AES) d'au moins 90 Jm²/kg, telle que déterminée selon le test STANAG 2920 en utilisant un fragment défini conformément à US-MIL-P-46593.

9. Pièce en forme, antibalistique selon la revendication 8, caractérisée en ce que la pièce en forme a une absorption d'énergie spécifique standardisée (AESS) d'au moins 115 J.m/kg^{0,5}.

10. Articles antibalistiques qui incluent, comme couche protectrice, un feutre selon la revendication 7 ou une pièce en forme, antibalistique, selon la revendication 8 ou 9.

11. Etoffe résistant aux coupures contenant une couche de feutre que l'on peut obtenir avec le procédé selon les revendications 1 à 6, la couche de feutre ayant une densité de fibres d'au moins 150 m de fibres par cm³ de feutre.

12. Etoffe résistant aux coupures selon la revendication 11, caractérisée en ce qu'une couche de structure tricotée, ou une couche de structure tissée, de fils qui contiennent des fibres de polymère ayant une résistance à la traction d'au moins 1,2 GPa et un module d'au moins 40 GPa, est liée à la couche de feutre.

13. Etoffe résistant aux coupures selon la revendication 11 ou la revendication 12, caractérisée en ce que la couche de feutre est imprégnée d'une matière de liant contenant des particules ayant une dureté d'au moins 3 sur l'échelle de dureté de Mohs.

14. Enveloppe protectrice contenant une étoffe résistant aux coupures selon une des revendications 1 à 13, comme couche protectrice.

15. Articles protecteurs de vêtements comme, notamment, les gilets, les combinaisons, les pantalons, les chemises, les manches et les gants, qui contiennent une couche d'une étoffe résistant aux coupures selon une des revendications 11 à 13 sur au moins les parties de surface qui sont exposées à un risque de coupure ou de perçage lors de l'emploi.
